# EUROPEAN PATENT SPECIFICATION

(11) **EP 1 939 715 B1**
(45) Date of publication and mention of the grant of the patent: **26.01.2011**
(21) Application number: 06127344.7
(22) Date of filing: 29.12.2006
(51) Int. Cl.: G06F 3/048

(54) **handheld electronic device providing confirmation of input, and associated method**
Tragbare elektronische Vorrichtung mit Eingabebestätigung und entsprechendes Verfahren
Dispositif électronique portatif fournissant une confirmation d'entrée de données, et procédé associé

(43) Date of publication of application: 02.07.2008
(73) Proprietor: RESEARCH IN MOTION LIMITED, Waterloo, Ontario N2L 3W8 (CA)
(72) Inventor: Griffin, Jason T, Kitchener, Ontario N2P 2L3 (CA)
(74) Representative: Roberts, Gwilym Vaughan

(56) References cited:
- WO-A-00/74240
- WO-A-98/33111
- DE-A1-102004 041 895
- US-A- 5 963 671
- US-A1- 2004 046 746
- US-A1- 2005 283 358
- US-B1- 6 307 548
- US-B1- 6 573 844
- SEARS A: "Improving touchscreen keyboards: design issues and a comparison with other devices" ONLINE PUBLICATION, 1991, Retrieved from the Internet: URL:http://citeseerx.ist.psu.edu/viewdoc/s ummary?doi=10.1.1.29.1352> [retrieved on 2008-09-25]

## Description

### BACKGROUND

### Field

The disclosed and claimed concept relates generally to handheld electronic devices and more particularly, to a handheld electronic device that provides a confirmation of a linguistic input.

### Description of the Related Art

Numerous types of handheld electronic devices are known. Examples of such handheld electronic devices include, for instance, personal data assistants (PDAs), handheld computers, two-way pagers, cellular telephones, and the like. Many handheld electronic devices also feature a wireless communication capability, although many such handheld electronic devices are stand-alone devices that are functional without communication with other devices.

United States Patent 6,573,844 discloses a predictive keyboard, such as a predictive soft keyboard. A computer-implemented method predicts at least one key to be entered next within a sequence of keys. The method displays a soft keyboard where the predicted keys are displayed on the soft keyboard differently than the other keys on the keyboard.

German Patent Application DE 10 2004 041895 Al discloses a mechanical input unit for a display unit having a pressure-sensitive surface. An embodiment is disclosed in which individual keys have more than one letter assigned thereto. As the user is inputting a word, the most likely letters to be chosen by the user to be the next letter of the word that is being inputted are predicted and highlighted directly on the individual keys after each keystroke. It is only predicted letters that are highlighted in this way.

Due to the small size of many handheld electronic devices, and due to the fact that users of handheld electronic devices typically can devote only a limited amount of attention to operating the device, as well as other factors, a user's operation of a handheld electronic device typically is prone to mistakes. The situation is exacerbated in the case of text input on a handheld electronic device when an input device such as a keypad is physically separated and/or spaced from an output device such as a display, which is often the case. That is, a user entering text using a keypad oftentimes must shift his or her attention from the keypad to the display in order to confirm that the intended input was actually correctly input into the handheld electronic device. Such a shifting in attention is particularly problematic since, as mentioned above, a user typically can devote only a limited amount of attention to a handheld electronic device, such as when the user is trying to carry on a conversation with another person or is operating another device while using the handheld electronic device. It thus would be desired to provide an improved handheld electronic device and method that overcome these and other shortcomings.

### BRIEF DESCRIPTION OF THE DRAWING

A full understanding of the disclosed and claimed concept can be gained from the following Description when read in conjunction with the accompanying drawings in which:

Fig. 1 is a front elevational view of an improved handheld electronic device in accordance with the disclosed and claimed concept after a first string of input member actuations;

Fig. 2 is a schematic depiction of the handheld electronic device of Fig. 1;

Fig. 3 is a view similar to Fig. 1, except depicting the handheld electronic device after an additional input member actuation;

Fig. 3A is a view similar to Fig. 3, except depicting an additional feature on the handheld electronic device;

Fig. 4 is a view similar to Fig. 1, except depicting the handheld electronic device after an additional input member actuation;

Fig. 5 is a view similar to Fig. 4 except depicting the handheld electronic device after still another input member actuation;

Fig. 6 is a view similar to Fig. 1, except depicting the handheld electronic device after a string of input member actuations when a focus of the handheld electronic device is on a password input field; and

Fig. 7 is a flowchart depicting an exemplary method in accordance with the disclosed and claimed concept that can be executed on the handheld electronic device of Fig. 1.

Similar numerals refer to similar parts throughout the specification.

### DESCRIPTION

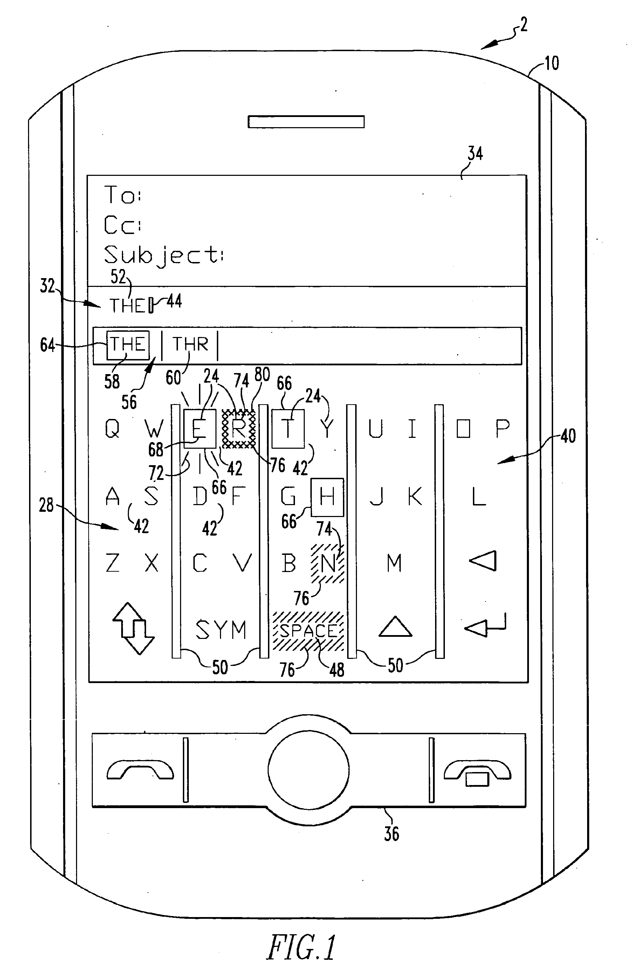

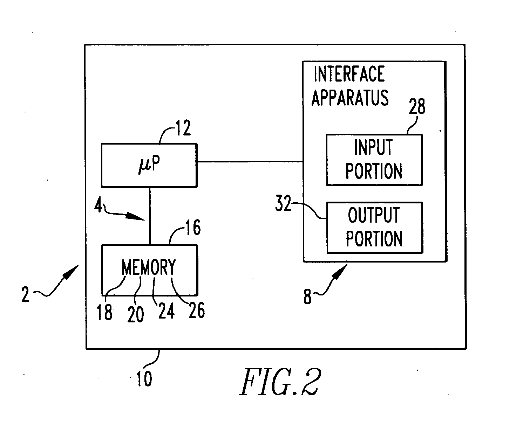

An improved handheld electronic device 2 in accordance with the disclosed and claimed concept is depicted generally in Figs. 1 and 3-6 and is depicted schematically in Fig. 2. The handheld electronic device 2 comprises a processor apparatus 4 and an interface apparatus 8 disposed on a housing 10.

The processor apparatus 4 comprises a processor 12 and a memory 16 in electronic communication. The processor 12 can be any of a wide variety of processors such as, without limitation, a microprocessor (µP) that is responsive to input from the interface apparatus 8 and that provides output signals to the interface apparatus 8. The memory 16 can be any of a wide variety of memory structures such as, without limitation, RAM, ROM, EPROM, EEPROM, FLASH, and/or other memory structures that function in a fashion similar to an internal storage area of a computer and that can be either volatile or nonvolatile.

The memory 16 has stored therein a plurality of language objects 18 and a plurality of frequency objects 20. The language objects 18 are generally each in the form of a word in the described exemplary embodiment, and each comprise a number of linguistic elements that are also stored in the memory 16. As employed herein, the expression "a number of" and variations thereof shall refer broadly to any nonzero quantity, including a quantity of one. The linguistic elements are, in the present exemplary embodiment, in the form of Latin letters 24. Each language object 18 is associated with a frequency object 20, and the associated frequency object 20 has a frequency value which, in the present exemplary embodiment, is indicative of the relative frequency with which the particular language object 18 appears in a given linguistic corpus.

The memory 16 additionally has stored therein a number of routines 26, including a disambiguation routine 26. The routines 26 are executable by the processor 12 and can be in the nature of software, firmware, and the like, for example and without limitation.

The interface apparatus 8 can be said to comprise an input portion 28 and an output portion 32. In the present example, the interface apparatus 8 comprises a touch screen 34 and a navigation keypad 36. The input portion 28 can be said to comprise a detecting component of the touch screen 34 and the navigation keypad 36. For instance, the detecting component is structured to detect a touch actuation or other type of physical interaction with the touch screen 34 and to provide an input to the processor apparatus 4 in a known fashion. The output portion 32 can be said to comprise a display component of the touch screen 34.

The input portion 28 of the touch screen 34 can be said to be a region of the touch screen 34 where a user can provide linguistic input to the processor apparatus 4 by interacting with the touch screen 34. The input portion 28 comprises a virtual keypad 40 comprising a plurality of virtual keys 42 on the touch screen 34. More specifically, each virtual key 42 can be said to comprise a particular region of the touch screen 34 that is touch actuatable or can receive another physical interaction that is detectable by the detecting component to provide an input to the processor apparatus 4. Each such virtual key 42 has a number of the letters 24 assigned thereto, with most having two letters 24 assigned thereto. For instance, one of the virtual keys 42 has the letters 24 <TY> assigned thereto, and another virtual key 42 has the letters 24 <ER> assigned thereto. The letters 24 that are assigned to any particular visual key 42 are depicted by the display component of the touch screen 34 in the vicinity of the input portion 28.

The virtual keypad 40 further includes a <SPACE> key 48 that is actuatable to provide a finalization input to the processor apparatus 4 and to insert a <SPACE> into text. In one exemplary embodiment, such a finalization input results in the outputting of a word at a text input location in the output portion 32 and a clearing of a stored string of input member actuations. The virtual keys 42, the <SPACE> key 48, and other keys in the virtual keypad 40 each comprise an input member that is actuatable to provide an input to the processor apparatus 4. The virtual keys 42 can each be said to constitute a linguistic input member.

In the embodiment depicted herein, many of the virtual keys 42 each have a plurality of the letters 24 assigned thereto. An actuation of a particular virtual key 42 is an input member actuation which begins or is added to a string of input member actuations. The letters 24 of the virtual keys 42 of such a string of input member actuations are used by the disambiguation routine 26 to identify one or more language obj ects 18 that correspond with the input, i.e., the string of input member actuations. That is, a language object 18 can be said to correspond with an input, i.e., a string of input member actuations, if the letters 24 of at least an initial portion of the language object 18 are sequentially consistent with a possible permutation of the letters 24 assigned to the virtual keys 42 that were actuated to form the string of input member actuations.

Since many of the virtual keys 42 have a plurality of the letters 24 assigned thereto and an actuation of any such virtual key 42 could be intended by a user to be an input of any one of the letters 24 assigned to such key 42, the virtual keypad 40 can be said to be in the form of a reduced keyboard. The exemplary arrangement of the letters 24 is that of a QWERTY format, and the virtual keypad 40 thus can be said to be a reduced QWERTY keyboard. It is noted, however, that the teachings herein can be employed in conjunction with arrangement of the letters 24 other than in a QWERTY or reduced QWERTY format. Moreover, it is noted that the virtual keypad 40 need not be virtual in nature provided by a touch screen 34, and instead could be provided in the form of a mechanical or other type of keyboard without departing from the present concept.

The display component of the touch screen 34 additionally displays in the input portion 28 a plurality of elongated separators 50 disposed between adjacent columns of the virtual keys 42. As such, the exemplary virtual key 42 <DF> is the region of the detecting component of the touch screen 34 that extends horizontally (from the perspective of Fig. 1) between one pair of adjacent separators 50 and extends vertically between the virtual key 42 <ER> and the vertical key 42 <CV>. Moreover, the display component of the touch screen 34 provides in the output portion 32 a text input component 52 and a variant component 56. During text entry, the exemplary disambiguation routine 26 operates by identifying one or more language objects 18 that correspond with a string of input member actuations. One of the identified language objects 18 is identified as being a default language object 18. In the depicted exemplary embodiment, the default language object 18 typically will be the identified language object 18 having associated therewith the frequency object 20 having the relatively highest frequency value from among the frequency objects 20 of the other identified language objects 18. More language objects 18 than merely the default language output 18 typically are identified by the disambiguation routine 26, although this need not always be the case.

An initial portion of the default language object 18 identified for a string of member input actuations is output as a default output 58 within the variant component 56. Initial portions of one or more other identified language objects 18, if any, may be output as variant outputs 60 within the variant component 56. A selection box 64 surrounds or otherwise highlights the default output 58. The default output 58 additionally is output at the text input component 52 at the location of a cursor 44. The cursor 44 indicates a location on the output portion 32 where additional text will be output responsive to another input member actuation. It is noted that the selection box 64 can be shifted by the user to one of the variant outputs 60 if such variant output 60 is the output intended by the user as a result of a string of input member actuations. In this regard, it is understood that the default output 58 is at least an initial portion of the identified language object 18 having the highest frequency value, and it is further understood that the variant outputs 60 are initial portions of other identified language objects 18 that are output in order of decreasing frequency value of the frequency objects 20 associated therewith.

The handheld electronic device 2 advantageously provides a letter confirmation system that provides highlighting in the input portion 28 of various letters 24 of virtual keys 42 that have been actuated during a text input procedure. The letter confirmation system can also be said to provide a predictive feature whereby one or more letters 24 can be highlighted in the input portion 28 as each being a predictive linguistic element that would constitute valid textual addition immediately following an entered string of input member actuations.

Fig. 1 depicts an exemplary output on the touch screen 34 responsive to a string of actuations of the virtual keys 42 <TY> <GH> <ER>. A language object 18 corresponding with the word "the" has been identified as corresponding with the string of member input actuations and as having the highest frequency value associated therewith. In this regard, it is noted that in certain circumstances an identified language object 18 that corresponds with a string of input member actuations and that has a quantity of letters 24 equal to the quantity of input member actuations may be identified as the default language object 18 despite other identified language objects 18 that have relatively higher frequency values associated therewith but that have more letters 24 than the number of input member actuations in the string.

As can be seen from Fig. 1, the letters 24 assigned to the virtual keys 42 that were actuated in inputting the string of input member actuations of Fig. 1 and that are consistent with the initial letters 24 of the default output 58 are highlighted in the input portion 28 with a first highlighting 66. The exemplary first highlighting 66 is depicted as being a box drawn around a letter 24. The exemplary first highlighting 66 is indicative of each such highlighted letter 24 being considered by the disambiguation routine 26 to be the default accepted letter 24 interpretation of the actuation of the virtual key 42 to which such letter 24 is assigned.

The letter 24 that is assigned to the virtual key 42 of the most recent input member actuation, i.e., the current input member actuation, and that is consistent with a sequentially correspondingly positioned letter 24 in the default output 58, i.e., the final letter 24 of the default output 58, is considered to be a current linguistic element 68 which, in Fig. 1, is the letter 24 "E". In order to further bring the current linguistic element 68 to the attention of the user, the current linguistic element 68 additionally has second highlighting 72 applied thereto in the exemplary form of a relatively greater degree of brightness than the other letters 24 as highlighted with the first highlight 66 in the input portion 28.

In this regard, such a brightening can be accomplished directly, such as by increasing the brightness of the current linguistic element 68 on the touch screen 34, or indirectly, such as by decreasing the brightness of all of the elements on the touch screen 34 other than the current linguistic element 68. For instance, if the display component of the touch screen 34 is an LCD screen, the indirect approach to increasing the brightness of the current linguistic element 68 might be required since LCDs are known to have limitations regarding increasing the brightness thereof. As such, depending upon the capabilities of the display component, the exemplary relatively greater degree of brightness might instead be provided by an altered color of the current linguistic element 68 and/or a thicker box of first highlighting 66 around the current linguistic element 68 and/or a pulsing of the current linguistic element 68, for example.

It can be seen that the letter "E" in Fig. 1 has two different types of highlighting applied thereto simultaneously, i.e., the first highlighting 66 and the second highlighting 72. Other letters 24 in the input portion 28 have no highlighting applied thereto. In the example depicted in Fig. 1, the first highlighting 66 confirms to a user the letters 24 of the default interpretation of a series of input member actuations without requiring the user to look at the output portion 32. The second highlighting 72 serves to identify to the user the letter 24 that is the current linguistic element 68, i.e., the preferred letter 24 of the most recently actuated virtual key 42. Such dual highlighting advantageously helps to inform the user of the currently proposed default interpretation of a string of actuations of virtual keys 42, and further provides to the user a confirmation of the most recently input letter 24 to mentally assist the user in inputting additional letters 24.

It is further noted from Fig. 1 that the letters 24 "R" and "N" are highlighted with third highlighting 76 to indicate that such letters 24 are predictive linguistic elements 74. Such third highlighting 76 is depicted in the exemplary form of angled hatching and is indicative of what would be an appropriate immediately next input. For instance, the letter 24 "N" is provided as a predictive linguistic element 74 to help the user enter, for instance, the word "then" by actuating the key 42 <BN> immediately after the string of input member actuations <TY> <GH> <ER>. The letter 24 "R" is provided as a predictive linguistic element 74 in the event that the user wanted to enter the word "there", which could be partially accomplished by actuating the virtual key 42 <ER> immediately after the string of input member actuations <TY> <GH> <ER>. Such predictive linguistic elements 74 can be identified from the language objects 18 in the memory 16. It thus can be seen that the predictive linguistic elements 74 are provided as indications of the next virtual keys 42 that can be actuated in order to input particular language objects 18.

It is noted that the <SPACE> key 48 has likewise received third highlighting 76 in order to indicate that its actuation would likewise be appropriate immediately after the series of actuations of the virtual keys 42 <TY> <GH> <ER>. That is, the default output 58 "the" is itself a complete word, and an actuation of the <SPACE> key 48 would provide a finalization input that would accept the default output 58, would output the default 58 as a completed word in the text input component 52, and would clear the existing stored string of input member actuations in order to make way for future input member actuations of another text input.

As can further be seen from Fig. 1, the letter 24 "R" additionally has fourth highlighting 80 applied thereto. Such fourth highlighting 80 is depicted in the form of angled hatching and is indicative of the predictive linguistic element 74 "R" having a relatively higher priority or frequency value than the predictive linguistic element 74 "N". That is, the letter 24 "R" is output as a predictive linguistic element 74 that is relatively more likely to be intended by the user than the letter 24 "N". Such a determination can be made from the language object 80 and/or the frequency objects 20 in the memory 16.

As mentioned above, the fourth highlighting 80 is represented herein by the exemplary angled hatching in Fig. 1. The exemplary third highlighting 76 is represented herein by the exemplary angled hatching oriented in a different direction than the hatching of the fourth highlighting 80. It is noted that the exemplary representation of the third and fourth highlightings 76 and 80 as being angled hatchings are intended to be merely illustrative of two different types of highlighting that can be employed to highlight the various letters 24 in the input portion 28. The same can be said for the exemplary first highlighting 66, which is represented herein by the exemplary box, and the second highlighting 72, which is in the exemplary form of a higher degree of brightness and is represented herein by the exemplary radially extending brightness lines. The same can be further said about fifth highlighting 82 that will be described in greater detail below.

That is, numerous different types of highlighting of letters 24 can be envisioned. For instance, some of the types of usable highlighting would comprise highlighting based upon brightness, size, color, contrast, objects such as circles and boxes surrounding the letters 24, bolding of fonts, italicization or other alteration of fonts, underlining of characters, and other types of highlighting, any one or more of which can be provided alone or in various combinations. In a mechanical keyboard, various types of lighting such as electroluminescent lighting or other backlighting can be employed. It thus is noted that the exemplary types of highlighting depicted and described herein are exemplary only and are not intended to be limiting.

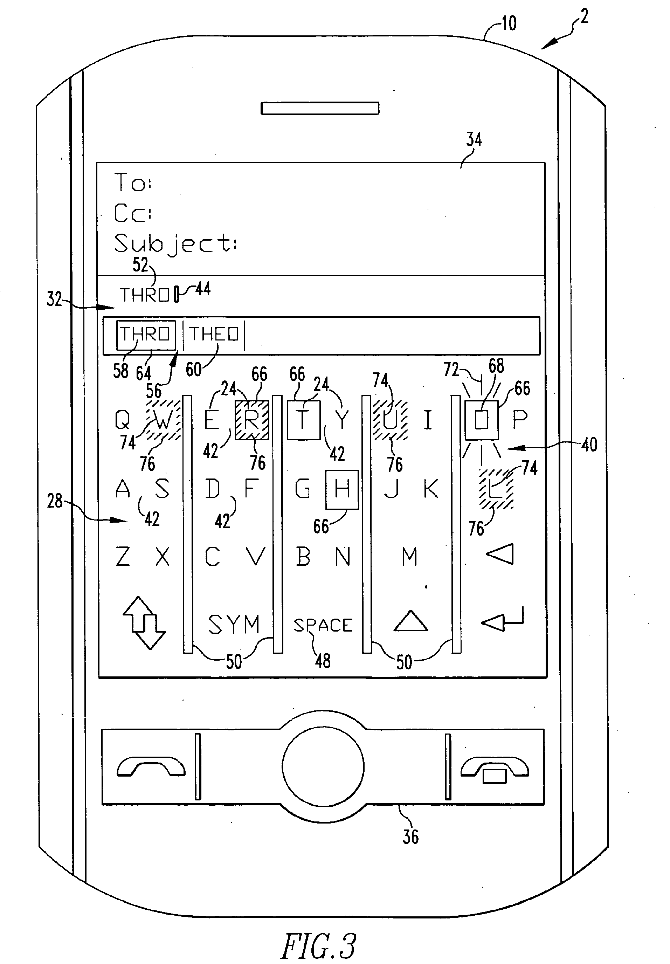

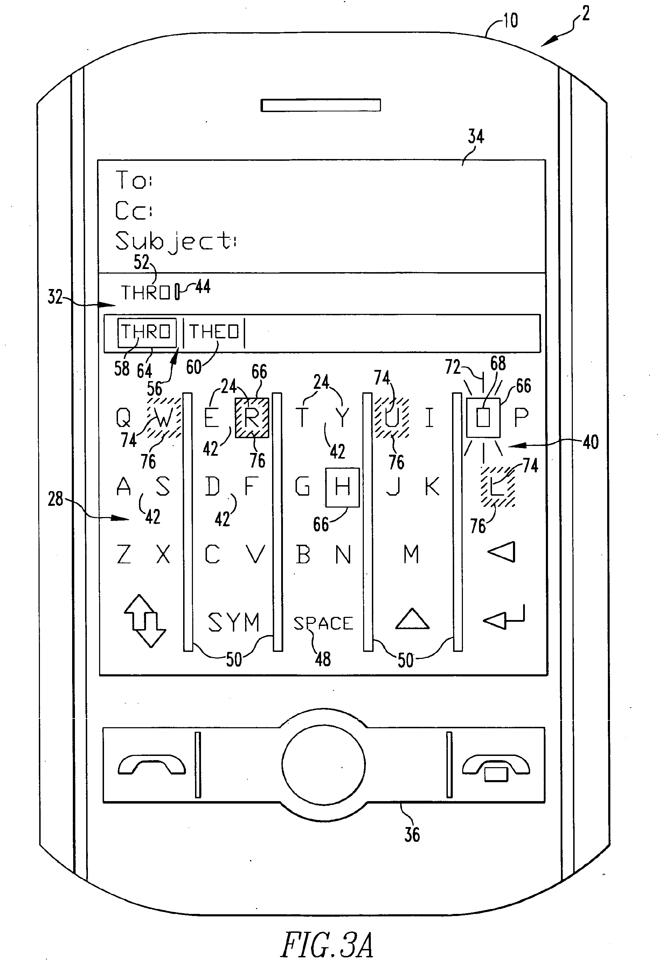

Fig. 3 depicts the handheld electronic device 2 of Fig. 1, except after the additional actuation of the virtual key 42 <OP> immediately after the actuations of the string of virtual keys 42 <TY> <GH> <ER>. Since the default output 58 is now "thro", such as might be an initial portion of the language object 18 corresponding with the word "through", the letters 24 "T" "H" "R" and "O" have received first highlighting 66 as being indicative of the default input path. As such the letter 24 "R" in Fig. 3 has received the first highlighting 66 that had previously been applied to the letter 24 "E" in Fig. 1 where it had represented that the letter 24 "E" of the actuated virtual key 42 <ER> was considered to be a part of the default input path thereof, as was indicated by the default output 58 thereof. As such, it can be seen that if the default language object 18 changes during the course of a string of input member actuations, the highlighting in the input portion 28 of the various letters 24 can likewise change.

The letter 24 "R" in Fig. 3 additionally has third highlighting 76 applied thereto to indicate that the letter 24 "R" is a predictive linguistic element 74, such as for the language object 18 "theory". Similarly, the letter 24 "L" has third highlighting 76 applied thereto to indicate that the letter 24 "L" is a predictive linguistic element 74, such as for the language object 18 "theology". It thus can be seen that the identified predictive linguistic elements 74 need not be limited to those that follow the currently highlighted default input path, and rather can enable the user to enter text along a different path than is currently highlighted.

Fig. 3A is similar to Fig. 3 but depicts the letter 24 "T" as being unhighlighted even though it is the first letter 24 of the current default output 58 of Fig. 3. Such an absence of highlighting of the letter 24 "T" is indicative of any of a number of optional features that can be provided on the handheld electronic device 2. For instance, the handheld electronic device 2 may be configured such that only a certain number of current and immediately preceding letters 24 of the default output 58 receive first highlighting 66. That is, the letter 24 "T" may have become unhighlighted upon actuation of the virtual key 42 <OP>. This may be provided in order to avoid cluttering the input portion 28 with too many of the letters 24 being highlighted or for other purposes. Alternatively, the handheld electronic device 24 may be configured such that certain of the first highlighting 66 disappears depending upon a rhythm of typing by the user. For instance, as the frequency of input member actuations increases, the duration of time during which a letter 24 of the default output 58 retains its first highlighting 66 decreases. In such a situation, Fig. 3A could be said to represent a situation wherein the user was typing with a faster rhythm than the rhythm with which the user was typing in Fig. 3.

A similar feature can be provided by altering the highlighting from an initial highlighting to a default highlighting in response to certain events. For instance, the second highlighting 72 could be altered from such second highlighting 72, i.e., an initial highlighting, to an absence of such highlighting or to a different highlighting, i.e., a default highlighting, after a certain duration of time or after an actuation of another virtual key 42. For example, it can be seen between Fig. 1 and Fig. 3 that the second highlighting 72 applied to the letter 24 "E" has changed in Fig. 3 to an absence of the second highlighting 72. Such an absence of highlighting or a different highlight could be provided as a default highlight. It is noted for the sake of completeness that in Fig. 3 the letter 24 "E" is depicted as being devoid of any highlighting whatsoever. That is, the first highlighting 66 has likewise been removed therefrom. It is noted that with a different virtual key 42 actuation the second highlighting 72 that had been applied to the letter 24 "E" in Fig. 1 could have changed from its initial highlighting in Fig. 1 to its default highlighting in Fig. 3, i.e., an absence of the second highlighting 72, without also removing the first highlighting 66.

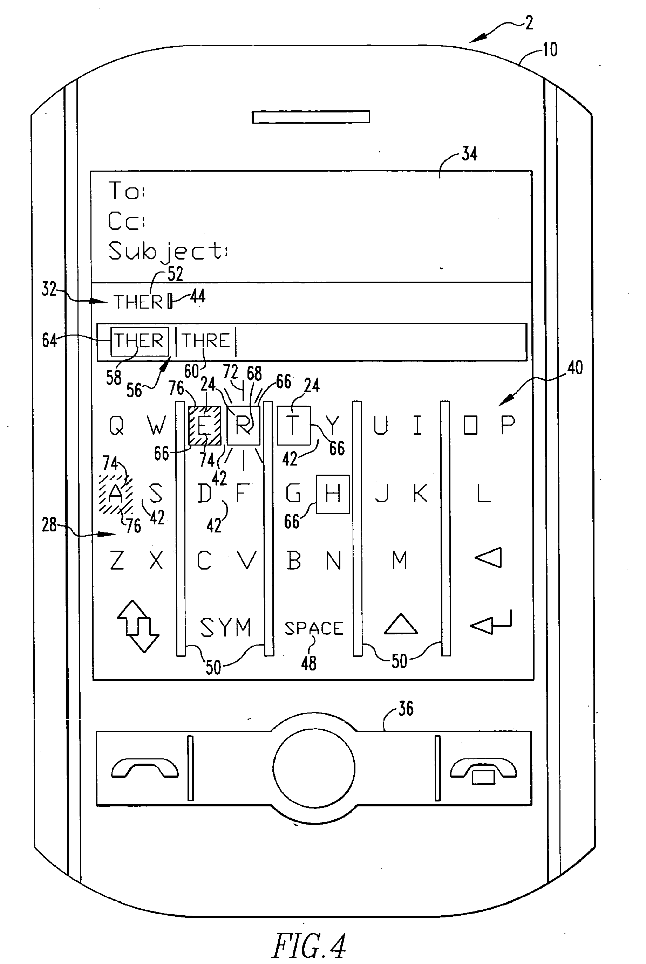

Fig. 4 is a view similar to Fig. 1 except depicting as an additional input member actuation an actuation of the virtual key 42 <ER> immediately after the series of actuations of the virtual keys 42 <TY> <GH> <ER>. Since in Fig. 4 the default output 58 is "ther", such as might correspond with the language object 18 representative of the word "there", the letter 24 "R" is now the current linguistic element 68 in Fig. 4 and thus has both the first and second highlightings 66 and 72 applied thereto. The letter 24 "E" is no longer the current linguistic element, and thus it no longer has the second highlighting 72 applied thereto, although it retains its first highlighting 66 since it remains a part of the default output 58 of Fig. 4. It is noted that the letter 24 "E" in Fig. 4 additionally has the third highlighting 76 applied thereto since such letter is now a predictive linguistic element 74 in Fig. 4, such as would indicate that the next input letter 24 appropriately could be the letter 24 "E" by actuating the virtual key 42 <ER>, such as might spell the word "there".

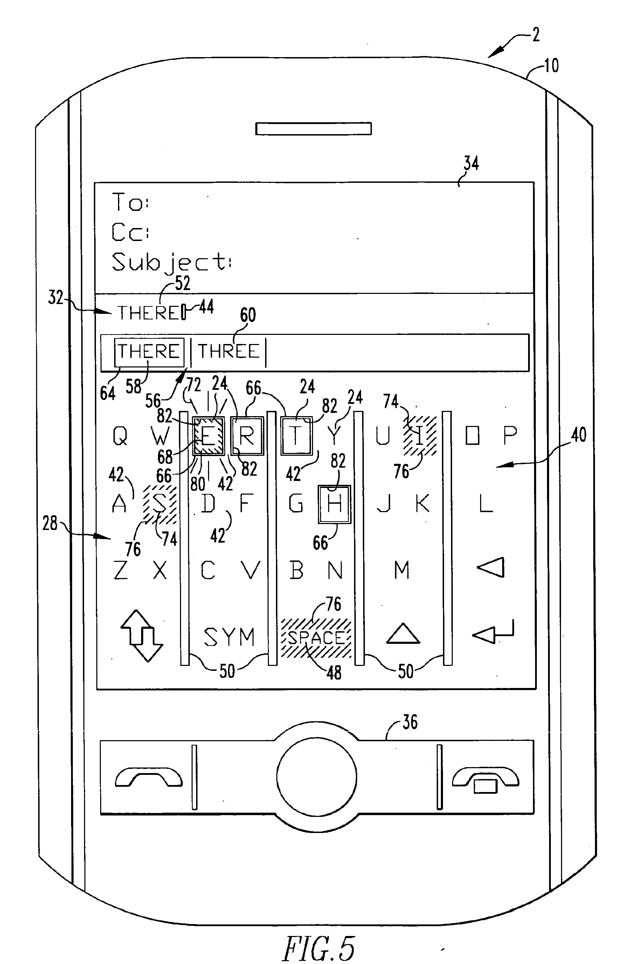

Fig. 5 is a view similar to Fig. 4, except depicting the result of an additional actuation of the virtual key 42 <ER>. The default output 58 in Fig. 5 has become the word "there" and thus the letter 24 "E" has become the current linguistic element 68 and second highlighting 72 has been applied thereto. It is further noted, however, that the letter 24 "E" further has fourth highlighting 80 applied thereto as is representative of the relative frequency with which the letter "E" appears in the default output 58. That is, the letter 24 "E" appears twice in the default output 58 "there", as compared with the other letters 24 in "there" which appear only once therein.

It can further be seen from Fig. 5 that the word "three" is a variant output 60 and is itself a complete word. Since a plurality of complete words, i.e., "there" and "three", correspond with the string of input member actuations and each consist of a quantity of letters 24 equal to the number of input member actuations in the string, a fifth highlighting 82 is applied in the input portion 28 to the letters 24 of the default output 58. Such fifth highlighting 82 is represented in an exemplary fashion as an additional box drawn about such letters 24 to thereby represent in combination with the first highlighting 66 a double box around each letter 24 of the default output 58. Such fifth highlighting 82 could be of any nature whatsoever, whether applied to the letters 24 in the input portion 28 or highlighting applied elsewhere on the handheld electronic device 2. Such fifth highlighting 82 indicates to the user the existence of an alternative complete word as an alternative to the default output 58. In this regard, such fifth highlighting 82 may be provided automatically upon the identification of two complete words corresponding with the string of input member actuations, or can be contingent upon the frequency values of the two language objects 18 being above a predetermined threshold and/or the difference in frequency values being below another predetermined threshold.

While each of the letters 24 of the default output 58 are indicated in the input portion 28 as having the first highlighting 66 applied thereto simultaneously, it is noted that such first highlighting 66 and/or other highlighting could be applied in the input portion 28 on a sequential basis to the letters 24 of the default output 58. That is, in the example depicted in Fig. 5, the letter 24 "T" in the input portion 28 would have the first highlighting 66 applied thereto, followed by the letter 24 "H" in the input portion 28 having the first highlighting 66 applied thereto. Immediately subsequent would occur application of the first highlighting 66 to the letters 24 "T", "R", and "E" in that order. The handheld electronic device 2 could be configured to repeat the series of sequential application of first highlighting 66 in the input portion 28 to the letters 24 of the default output 58, if desired. Moreover, the handheld electronic device 2 could be set up such that only one of the letters 24 of the default output 58 would have the first highlighting 66 applied thereto at any one time, such as would result in an appearance of the first highlighting 66 being shifted from one letter 24 to the next in the default output 58. Alternatively, the first highlightings 66 of the letters 24 in the default output 58 could be cumulative, depending upon the desires and needs of the user.

It is further noted that such repetitive application of highlighting to the letters 24 in the default output 58 could occur at all times, or could be configured to occur only upon detecting a finalization input, such as could be provided by actuating the <SPACE> key 48. In the latter situation, upon detection of the finalization input, the first highlighting 66 would switch to the sequential type mentioned above, either once sequentially or repetitively sequentially until an additional input is detected. In the event of detecting a finalization input, the default output 58 is output at the text input component 52. Also, the string of input member actuations that resulted in the input of the aforementioned default output 58 would be cleared from memory to make room for additional input member actuations.

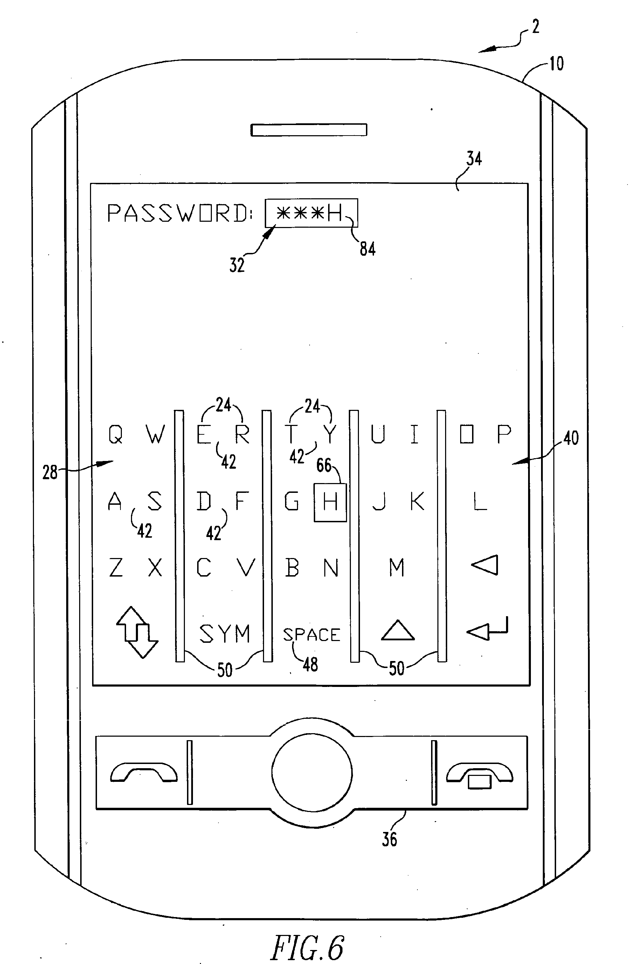

Fig. 6 depicts another aspect of the disclosed and claimed concept. Specifically, in some circumstances a focus of the processor apparatus 4 may be on a field of a particular type, such as a password input field 84. In such a situation, it may be desirable to suspend operation of the letter confirmation system or to provide only minimal confirmation of the letters 24 being input. Fig. 6 depicts a textual input entered in the password input field 84 with only a minimal, i.e., short duration, confirmation in the input portion 28 of each such input letter 24. For instance, Fig. 6 depicts the letter 24 "H" having first highlighting 66 applied thereto, and further depicts the letter 24 "H" being output within the password input field 84. The three asterisks preceding the letter 24 "H" represent three preceding letters 24 that were input as a result of three actuations of virtual keys 42. Such three input member actuations preceding input of the letter 24 "H" are each indicated generically by an asterisk in the password input field 84 but do not receive any sustained highlighting in the input portion 28. The first highlighting 66 applied to the letter 24 "H", or applied to any preceding letter 24, may appear for a duration on the order of one second or less, depending upon the needs of the user. Such a configuration thus advantageously provides a letter confirmation system but provides it only to a minimal extent to protect the privacy of the user while still providing confirmation of the input being provided to the password input field 84.

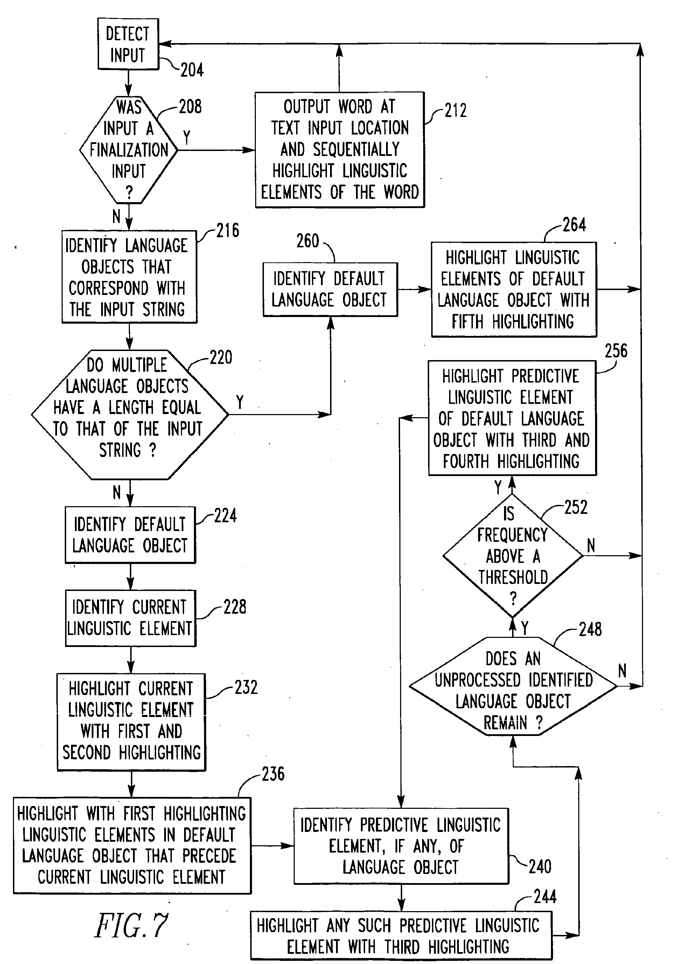

An improved method in accordance with the disclosed and claimed concept that can be executed on the handheld electronic device 2 is depicted generally in Fig. 7. Processing begins with the detection of an input, as at 204. It is then determined, as at 208, whether the input was a finalization input, such as would result from an actuation of the <SPACE> key 48, an actuation of an <ENTER> key, a click actuation of a track wheel or a trackball, or an actuation of another finalization input member. If it is determined at 208 that the input was, in fact, a finalization input, processing continues, as at 212, where the default output 58 is output as a word at the text input location 52, and highlighting is applied in a sequential fashion in the input portion 28 to the letters 24 that correspond with the word in the text input location 52. Processing thereafter continues to 204 where additional input can be detected.

If, however, it is determined at 208 that the input was not a finalization input, processing continues, as at 216, where one or more language objects 18 that correspond with the input string are identified. In this regard, and as suggested above, a language object 18 having at least an initial portion of letters 24 that are consistent with the letters of the string of input member actuations is considered to correspond with the string of input member actuations, i.e., the input or the input string. It is then determined, as at 220, whether multiple language objects each have a length equal to that of the input string. If not, processing continues to 224 where a default language object 18 is identified from among the various language objects 18 that were identified at 216. The default language object 18 is, in the present exemplary embodiment, identified at 224 on the basis of having associated therewith a frequency object 20 having a relatively greatest frequency value when compared with the other identified language object 18 and their associated frequency objects 20.

Processing thereafter continues to 228 where a current linguistic element 68 is identified within the default language object 18. That is, a current input member actuation is an actuation of the most recently actuated virtual key 42. The letter 24 assigned to the most recently actuated virtual key 42 and which is consistent with a sequentially corresponding letter 24 in the default output 58 is the current linguistic element.

Processing thereafter continues to 232 where the current linguistic element 68 is highlighted with first and second highlighting 66 and 72. The first highlighting can, for example, be representative of the fact that the current linguistic element 68 is a letter 24 in the default output 58, and the second highlighting 72 can be representative, for instance, of the current linguistic element 68 being the most recently input letter 24. Processing thereafter continues to 236 where first highlighting 66 is applied to at least some of the preceding letters 24 of the default output 58, if any. In this regard, it is understood that the quantity of preceding letters 24 in the default output 58 to which such first highlighting 66 is applied can vary depending upon, for example, the frequency of typing by the user, a preset limit on the number of letters 24 which should receive highlighting, and the like.

Processing thereafter continues to 240 where a predictive linguistic element 74, if any, may be identified in the current language object 18. Thereafter, as at 244, any such predictive linguistic element 74 receives third highlighting 76.

Processing thereafter continues to 248 where it is determined whether or not any language objects 18 which were identified at 216 remain unprocessed, i.e., have not been evaluated to identify a predictive linguistic element 74 therein that desirably might be highlighted in the input portion 28. If at 248 any such unprocessed language object 18 is determined to remain, processing continues, as at 252, where it is determined whether or not the frequency value of the frequency object 20 associated with such a language object 18 is above a predetermined threshold. If the frequency is determined at 252 to be above such threshold, processing continues, as at 256, where the predictive linguistic element 74 of the default language object 18 or the next highest frequency language object 18 is redisplayed with third and fourth highlighting 76 and 80. That is, such a predictive linguistic element 74 is now being redisplayed additionally with fourth highlighting 80 indicative of a relatively high frequency of such predictive linguistic elements 74 based upon additional predictive linguistic elements 74 being identified in other language objects 18. Processing thereafter continues to 240 where the additional predictive linguistic element 74, if any, can be identified for possible output, as at 244.

It is noted that the frequency threshold analysis at 252 is purely optional, it being noted that low frequency predictive linguist elements 74 desirably might be suppressed from highlighting in the input portion 28 in order to avoid distraction. If the frequency is determined at 252 to not be above the threshold, processing continues, as at 204, where additional input can be detected. Similarly, if it is determined at 248 that no unprocessed identified language objects remain, process continues, as at 204, where additional input can be detected.

If it is determined at 220 that multiple language objects 18 do, in fact, have a length equal to that of the input string, processing continues, as at 260 where a default language object 18 is identified, typically on the basis of a relatively highest frequency value. Processing thereafter continues to 264 where the linguistic elements of the default language object receive, in the input portion 28, fifth highlighting 82. It is understood, however, that such fifth highlighting 82 could be provided in other fashions and in other locations without departing from the disclosed concept.

It thus can be seen that the instant letter confirmation system advantageously facilitates text input by providing confirmation of letters being input on the handheld electronic device 2, as is reflected in a default output 58. The letter confirmation system further facilitates text input by providing predictive linguistic elements 74 that would be appropriate next inputs. It is reiterated that the various exemplary highlighting techniques depicted and described herein can be replaced with numerous other types of highlighting. It is further noted that changes in highlighting can occur either transitionally, i.e., gradually, or can occur in a more abrupt fashion, depending upon the needs of the user. For instance, when a given highlighting changes from an initial highlight to a default highlight, such change can either occur abruptly between the initial and default highlights, or can gradually shift between the initial and default highlights depending upon the needs of the user, without departing from the present concept.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A method of enabling input on a handheld electronic device (2) comprising a processor apparatus (4) and an interface apparatus (8), the processor apparatus (4) comprising a processor (12) and a memory (16) in electronic communication with one another, the memory (16) having stored therein a plurality of objects comprising a plurality of language objects (18) and a plurality of linguistic elements, at least some of the language objects (18) each comprising a number of the linguistic elements, and a disambiguation routine (26) executable on the processor (12), the interface apparatus (8) having an input portion (28) comprising a plurality of input members (42), wherein at least some of the input members (42) each have a plurality of linguistic elements (24) assigned thereto, the interface apparatus (8) being structured to highlight one or more of the linguistic elements (24) in the input portion (28) responsive to signals from the processor apparatus (4), the method comprising:
detecting an input comprising a number of input member (42) actuations including a current input member actuation;
employing the disambiguation routine (26) to identify a default language object (18) having at least an initial portion that corresponds with the linguistic elements of the input;
highlighting in the input portion (28) one current linguistic element (68) that is consistent with one of the plurality of linguistic elements (24) assigned to the input member (42) of the current input member actuation and that is positioned in the default language object (18) at a location that corresponds with the current input member actuation.

2. The method of Claim 1, further comprising:
identifying a predictive linguistic element (74) that it is positioned in the default language object (18) at a location adjacent and subsequent to the current linguistic element (68); and
highlighting in the input portion (28) the predictive linguistic element (74).

3. The method of Claim 2, further comprising identifying as said default language object (18) a plurality of default language objects (18) each having an initial portion that corresponds with the linguistic elements of the input, identifying as said predictive linguistic element (74) a predictive linguistic element (74) for each of the plurality of default language objects (18), and highlighting in the input portion (28) as the predictive linguistic element (74) a plurality of the predictive linguistic elements (74).

4. the method of Claim 3 wherein at least some of the language objects (18) each have a frequency value associated therewith, and further comprising varying the highlighting in the input portion (28) of the plurality of predictive linguistic elements (74) according to the frequency values of the plurality of default language objects (18) from which the plurality of predictive linguistic elements (74) are obtained.

5. The method of Claim 1, further comprising, responsive to each input member actuation of the input, highlighting in the input portion (28) a linguistic element assigned to the input, member that is consistent with a correspondingly positioned linguistic element in the default language object (18).

6. the method of Claim 5, further comprising, with each successive input member actuation of the input, highlighting in the input portion (28) a linguistic element that is assigned to an input member of each of a number of immediately preceding input member actuations and that is consistent with a correspondingly positioned linguistic element in the default language object (18).

7. The method of Claim 6, further comprising identifying as said default language object (18) a different language object than that which was identified as a preceding default language object (18) having at least an initial portion that corresponded with a portion of the input preceding the current input member actuation and, responsive to the current input member actuation, highlighting in the input portion (28) a different linguistic element of an input member of the input than was highlighted in accordance with the preceding default language object (18).

8. The method df Claim 6, further comprising employing a frequency of input member actuations of the input to determine the quantity of input members preceding the current input member actuation for which a linguistic element is highlighted, wherein the quantity increases as said frequency decreases.

9. The method of Claim 6, further comprising employing as said highlighting an initial highlighting that changes to a default highlighting after an interval, and employing a frequency of input member actuations of the input to determine a duration of the interval, wherein the duration increases as said frequency decreases.

10. The method of Claim 6, further comprising employing as said highlighting of a linguistic element of an input member both a first highlighting and a second highlighting, the first highlighting varying with the quantity of times the linguistic element exists in the initial portion of the default language object (18), the second highlighting varying with a recency of actuation of the input member.

11. The method of Claim 6, further comprising providing as said highlighting a repetitive sequential highlighting of each said linguistic element that is assigned to an input member of each of a number of immediately preceding input member actuations.

12. The method of Claim 5 wherein the interface apparatus (8) further comprises a password input field, and further comprising:
determining that a focus of the processor apparatus (4) is on the password input field; and
responsive to each input member actuation of the input, providing as said highlighting a temporary highlighting of said linguistic element assigned to the input member followed by an absence of highlighting of said linguistic element

13. The method of Claim 5, further comprising determining that the quantity of input member actuations in the input and the quantity of linguistic elements in the default language object (18) and are equal, responsive thereto, highlighting a finalization input member.

14. The method of Claim 2, further comprising:
highlighting in the input portion (28) the current linguistic element (68) with a first highlighting; and
highlighting in the input portion (28) the predictive linguistic element (74) with a second highlighting different than the first highlighting.

15. The method of Claim 1 wherein the interface apparatus (8) further comprises an output portion, and further comprising:
detecting a finalization input;
outputting at a text input location on the output portion a word corresponding with the input; and
sequentially highlighting in the input portion (28) the linguistic elements corresponding with the word.

16. The method of Claim 1, further comprising determining that the input corresponds with two default language objects (18) each having a quantity of linguistic elements equal to the quantity of input member actuations in the input and, responsive thereto, providing another highlight.

17. A handheld electronic device (2) comprising:
a processor apparatus (4) comprising a processor (12) and a memory (16) in electronic communication with one another, the memory (16) having stored therein a disambiguation routine (26) executable on the processor (12), a plurality of objects comprising a plurality of language objects (18) and a plurality of linguistic elements, at least some of the language objects (18) each comprising a number of the linguistic elements; and
an interface apparatus (8) having an input portion (28) comprising a plurality of input members (42), wherein at least some of the input members (42) each have a plurality of linguistic elements (24) assigned thereto, the interface apparatus (8) being structured to highlight one or more of the linguistic elements (24) in the input portion (28) responsive to signals from the processor apparatus (4);
the memory (16) further having stored therein a number of routines which, when executed on the processor (12), cause the handheld electronic device (2) to perform operations comprising:
detecting an input comprising a number of input member (42) actuations including a current input member actuation;
employing the disambiguation routine (26) to identify a default language object (18) having at least an initial portion that corresponds with the linguistic elements of the input;
highlighting in the input portion (28) one current linguistic element (68) that is consistent with one of the plurality of linguistic elements (24) assigned to the input member (42) of the current input member actuation and that is positioned in the default language object (18) at a location that corresponds with the current input member actuation.

18. The handheld electronic device (2) of Claim 17, wherein the operations further comprise, responsive to each input member actuation of the input, highlighting in the input portion (28) a linguistic element assigned to the input member that is consistent with a correspondingly positioned linguistic element in the default language object (18).

19. The handheld electronic device (2) of Claim 17, wherein the operations further comprise:
identifying a predictive linguistic element (74) that is positioned in the default language object (18) at a location adjacent and subsequent to the current linguistic element (68); and
highlighting in the input portion (28) the predictive linguistic element (74).

20. The handheld electronic device (2) of Claim 19 wherein the operations further comprise:
highlighting in the input portion (28) the current linguistic element (68) with a first highlighting; and
highlighting in the input portion (28) the predictive linguistic element (74) with a second highlighting different than the first highlighting.

21. The handheld electronic device (2) of Claim 17 wherein the operations further comprise determining that the input corresponds with two default language objects (18) each having a quantify of linguistic elements equal to the quantity of input member actuations in the input and, responsive thereto providing another highlight.

22. The handheld electronic device (2) of Claim 17 wherein the interface apparatus (8) comprises a touch screen, the touch screen comprising a detecting component structured to provide an input to the processor apparatus (4) responsive to an actuation, the touch screen additionally comprising a display component structured to provide visual output, said input portion (28) of the interface apparatus (8) comprising a portion of the detecting component and a portion of the displaying component, the displaying component being structured to display a given linguistic element and to display a highlighting of the given linguistic element in the input portion (28), the detecting component being structured to provide an input to the processor apparatus (4) responsive to an actuation of the given linguistic element.

## Patentansprüche

1. Verfahren zum Ermöglichen einer Eingabe auf einer handgehaltenen elektronischen Vorrichtung (2), die eine Prozessorvorrichtung (4) und eine Schnittstellenvorrichtung (8) aufweist, wobei die Prozessorvorrichtung (4) einen Prozessor (12) und einen Speicher (16) in elektronischer Kommunikation miteinander aufweist, wobei der Speicher (16) eine Vielzahl von Objekten, die eine Vielzahl von Sprachobjekten (18) aufweisen, und eine Vielzahl von linguistischen Elementen gespeichert hat, wobei zumindest einige der Sprachobjekte (18) jeweils eine Anzahl der linguistischen Elemente aufweisen, und eine Disambiguierungsroutine (26), die auf dem Prozessor (12) ausführbar ist, wobei die Schnittstellenvorrichtung (8) einen Eingabeteil (28) hat, der eine Vielzahl von Eingabeelementen (42) aufweist, wobei zumindest einige der Eingabeelemente (42) jeweils eine Vielzahl von linguistischen Elementen (24) zugewiesen haben, wobei die Schnittstellenvorrichtung (8) strukturiert ist, in Reaktion auf Signale von der Prozessorvorrichtung (4) eines oder mehrere der linguistischen Elemente (24) in dem Eingabeteil (28) hervorzuheben, wobei das Verfahren aufweist:
Erfassen einer Eingabe, die eine Anzahl von Betätigungen von Eingabeelementen (42) aufweist, einschließlich einer aktuellen Eingabeelementbetätigung;
Einsetzen der Disambiguierungsroutine (26), um ein Standard-Sprachobjekt (18) zu identifizieren, das zumindest einen Anfangsteil hat, der den linguistischen Elementen der Eingabe entspricht;
Hervorheben, in dem Eingabeteil (28), eines aktuellen linguistischen Elements (68), das übereinstimmend ist mit einem der Vielzahl von linguistischen Elementen (24), die dem Eingabeelement (42) der aktuellen Eingabeelementbetätigung zugewiesen sind, und das in dem Standard-Sprachobjekt (18) an einer Position positioniert ist, die der aktuellen Eingabeelementbetätigung entspricht.

2. Verfahren gemäß Anspruch 1, das weiter aufweist:
Identifizieren eines prädiktiven linguistischen Elements (74), das in dem Standard-Sprachobjekt (18) an einer Position positioniert ist, die angrenzend und nachfolgend zu dem aktuellen linguistischen Element (68) ist; und
Hervorheben des prädiktiven linguistischen Elements (74) in dem Eingabeteil (28).

3. Verfahren gemäß Anspruch 2, das weiter aufweist Identifizieren, als das Standard-Sprachobjekt (18), einer Vielzahl von Standard-Sprachobjekten (18), die jeweils einen Anfangsteil haben, der den linguistischen Elementen der Eingabe entspricht, Identifizieren, als das prädiktive linguistische Element (74), eines prädiktiven linguistischen Elements (74) für jedes der Vielzahl von Standard-Sprachobjekten (18), und Hervorheben als das prädiktive linguistische Element (74) in dem Eingabeteil (28) einer Vielzahl der prädiktiven linguistischen Elemente (74).

4. Verfahren gemäß Anspruch 3, wobei zumindest einige der Sprachobjekte (18) jeweils einen zugehörigen Häufigkeitswert haben, und das weiter aufweist Variieren des Hervorhebens in dem Eingabeteil (28) der Vielzahl von prädiktiven linguistischen Elementen (74) gemäß den Häufigkeitswerten der Vielzahl von Standard-Sprachobjekten (18), aus denen die Vielzahl von prädiktiven linguistischen Elementen (74) erlangt wird.

5. Verfahren gemäß Anspruch 1, das weiter aufweist, in Reaktion auf jede Eingabeelementbetätigung der Eingabe, Hervorheben in dem Eingabeteil (28) eines linguistischen Elements, das dem Eingabeelement zugewiesen ist, das übereinstimmend mit einem entsprechend positionierten linguistischem Element in dem Standard-Sprachobjekt (18) ist.

6. Verfahren gemäß Anspruch 5, das weiter aufweist, mit jeder aufeinanderfolgenden Eingabeelementbetätigung der Eingabe, Hervorheben in dem Eingabeteil (28) eines linguistischen Elements, das einem Eingabeelement von jeder einer Anzahl von unmittelbar vorhergehenden Eingabeelementbetätigungen zugewiesen ist und das übereinstimmend mit einem entsprechend positionierten linguistischen Element in dem Standard-Sprachobjekt (18) ist.

7. Verfahren gemäß Anspruch 6, das weiter aufweist Identifizieren, als das Standard-Sprachobjekt (18), eines anderen Sprachobjekts als das, das identifiziert wurde als ein vorhergehendes Standard-Sprachobjekt (18) mit zumindest einem Anfangsteil, der einem Teil der Eingabe entsprach, die der aktuellen Eingabeelementbetätigung vorhergeht, und, in Reaktion auf die aktuelle Eingabeelementbetätigung, Hervorheben, in dem Eingabeteil (28), eines anderen linguistischen Elements eines Eingabeelements der Eingabe als das, das hervorgehoben wurde in Übereinstimmung mit dem vorhergehenden Standard-Sprachobjekt (18).

8. Verfahren gemäß Anspruch 6, das weiter aufweist Einsetzen einer Häufigkeit von Eingabeelementbetätigungen der Eingabe, um die Quantität von Eingabeelementen zu bestimmen, die der aktuellen Eingabeelementbetätigung vorhergehen, für die ein linguistisches Element hervorgehoben wird, wobei die Quantität zunimmt, wenn die Häufigkeit abnimmt.

9. Verfahren gemäß Anspruch 6, das weiter aufweist Einsetzen, als das Hervorheben, eines anfänglichen Hervorhebens, das sich nach einem Intervall zu einem Standard-Hervorheben ändert, und Einsetzen einer Häufigkeit von Eingabeelementbetätigungen der Eingabe, um eine Dauer des Intervalls zu bestimmen, wobei die Dauer zunimmt, wenn die Häufigkeit abnimmt.

10. Verfahren gemäß Anspruch 6, das weiter aufweist Einsetzen, als das Hervorheben eines linguistischen Elements eines Eingabeelements, sowohl eines ersten Hervorhebens als auch eines zweiten Hervorhebens, wobei das erste Hervorheben mit der Quantität von Malen variiert, wie oft das linguistische Element in dem Anfangsteil des Standard-Sprachobjekts (18) existiert, wobei das zweite Hervorheben mit einer Neuheit einer Betätigung des Eingabeelements variiert.

11. Verfahren gemäß Anspruch 6, das weiter aufweist Vorsehen, als das Hervorheben, eines wiederholenden sequentiellen Hervorhebens jedes linguistischen Elements, das einem Eingabeelement von jeder einer Anzahl von unmittelbar vorhergehenden Eingabeelementbetätigungen zugewiesen ist.

12. Verfahren gemäß Anspruch 5, wobei die Schnittstellenvorrichtung (8) weiter ein Passwort-Eingabefeld aufweist, und das weiter aufweist:
Bestimmen, dass ein Fokus der Prozessorvorrichtung (4) auf dem Passwort-Eingabefeld ist; und
in Reaktion auf jede Eingabeelementbetätigung der Eingabe, Vorsehen, als das Hervorheben, eines temporären Hervorhebens des linguistischen Elements, das dem Eingabeelement zugewiesen ist, gefolgt durch ein Fehlen eines Hervorhebens des linguistischen Elements.

13. Verfahren gemäß Anspruch 5, das weiter aufweist Bestimmen, dass die Quantität von Eingabeelementbetätigungen in der Eingabe und die Quantität von linguistischen Elementen in dem Standard-Sprachobjekt (18) gleich ist, und, in Reaktion darauf, Hervorheben eines Beendigungseingabeelements.

14. Verfahren gemäß Anspruch 2, das weiter aufweist:
Hervorheben, in dem Eingabeteil (28), des aktuellen linguistischen Elements (68) mit einem ersten Hervorheben; und
Hervorheben, in dem Eingabeteil (28), des prädiktiven linguistischen Elements (74) mit einem zweiten Hervorheben, das von dem ersten Hervorheben verschieden ist.

15. Verfahren gemäß Anspruch 1, wobei die Schnittstellenvorrichtung (8) weiter einen Ausgabeteil aufweist, und das weiter aufweist:
Erfassen einer Beendigungseingabe;
Ausgeben an einer Texteingabeposition auf dem Ausgabeteil eines Worts, das der Eingabe entspricht; und
sequentielles Hervorheben, in dem Eingabeteil (28), der linguistischen Elemente, die dem Wort entsprechen.

16. Verfahren gemäß Anspruch 1, das weiter aufweist Bestimmen, dass die Eingabe zwei Standard-Sprachobjekten (18) entspricht, die jeweils eine Quantität von linguistischen Elementen haben, die gleich ist zu der Quantität von Eingabeelementbetätigungen in der Eingabe, und, in Reaktion darauf, Vorsehen einer weiteren Hervorhebung.

17. Handgehaltene elektronische Vorrichtung (2), die aufweist:
eine Prozessorvorrichtung (4), die einen Prozessor (12) und einen Speicher (16) in elektronischer Kommunikation miteinander aufweist, wobei der Speicher (16) eine Disambiguierungsroutine (26), die auf dem Prozessor (12) ausführbar ist, eine Vielzahl von Objekten, die eine Vielzahl von Sprachobjekten (18) aufweisen, und eine Vielzahl von linguistischen Elementen gespeichert hat, wobei zumindest einige der Sprachobjekte (18) jeweils eine Anzahl der linguistischen Elemente aufweisen; und
eine Schnittstellenvorrichtung (8) mit einem Eingabeteil (28), der eine Vielzahl von Eingabeelementen (42) aufweist, wobei zumindest einige der Eingabeelemente (42) jeweils eine Vielzahl von linguistischen Elementen (24) zugewiesen haben, wobei die Schnittstellenvorrichtung (8) strukturiert ist, eines oder mehrere der linguistischen Elemente (24) in dem Eingabeteil (28) hervorzuheben in Reaktion auf Signale von der Prozessorvorrichtung (4);
wobei der Speicher (16) weiter eine Anzahl von Routinen gespeichert hat, die bei Ausführung auf dem Prozessor (12) die handgehaltene elektronische Vorrichtung (2) veranlassen, Operationen durchzuführen, die aufweisen:
Erfassen einer Eingabe, die eine Anzahl von Betätigungen von Eingabeelementen (42) aufweist, einschließlich einer aktuellen Eingabeelementbetätigung;
Einsetzen der Disambiguierungsroutine (26), um ein Standard-Sprachobjekt (18) zu identifizieren, das zumindest einen Anfangsteil hat, der den linguistischen Elementen der Eingabe entspricht;
Hervorheben, in dem Eingabeteil (28), eines aktuellen linguistischen Elements (68), das übereinstimmend ist mit einem der Vielzahl von linguistischen Elementen (24), die dem Eingabeelement (42) der aktuellen Eingabeelementbetätigung zugewiesen sind, und das in dem Standard-Sprachobjekt (18) an einer Position positioniert ist, die der aktuellen Eingabeelementbetätigung entspricht.

18. Handgehaltene elektronische Vorrichtung (2) gemäß Anspruch 17, wobei die Operationen weiter aufweisen, in Reaktion auf jede Eingabeelementbetätigung der Eingabe, Hervorheben, in dem Eingabeteil (28), eines linguistischen Elements, das dem Eingabeelement zugewiesen ist, das übereinstimmend ist mit einem entsprechend positionierten linguistischen Element in dem Standard-Sprachobjekt (18).

19. Handgehaltene elektronische Vorrichtung (2) gemäß Anspruch 17, wobei die Operationen weiter aufweisen:
Identifizieren eines prädiktiven linguistischen Elements (74), das in dem Standard-Sprachobjekt (18) an einer Position positioniert ist, die angrenzend und nachfolgend zu dem aktuellen linguistischen Element (68) ist; und
Hervorheben des prädiktiven linguistischen Elements (74) in dem Eingabeteil (28).

20. Handgehaltene elektronische Vorrichtung (2) gemäß Anspruch 19, wobei die Operationen weiter aufweisen:
Hervorheben, in dem Eingabeteil (28), des aktuellen linguistischen Elements (68) mit einem ersten Hervorheben; und
Hervorheben, in dem Eingabeteil (28), des prädiktiven linguistischen Elements (74) mit einem zweiten Hervorheben, das von dem ersten Hervorheben verschieden ist.

21. Handgehaltene elektronische Vorrichtung (2) gemäß Anspruch 17, wobei die Operationen weiter aufweisen Bestimmen, dass die Eingabe zwei Standard-Sprachobjekten (18) entspricht, die jeweils eine Quantität von linguistischen Elementen haben, die gleich ist zu der Quantität von Eingabeelementbetätigungen in der Eingabe, und, in Reaktion darauf, Vorsehen einer weiteren Hervorhebung.

22. Handgehaltene elektronische Vorrichtung (2) gemäß Anspruch 17, wobei die Schnittstellenvorrichtung (8) einen Berührungsbildschirm aufweist, wobei der Berührungsbildschirm eine Erfassungskomponente aufweist, die strukturiert ist, in Reaktion auf eine Betätigung eine Eingabe an die Prozessorvorrichtung (4) zu liefern, wobei der Berührungsbildschirm zusätzlich eine Anzeigekomponente aufweist, die strukturiert ist, eine visuelle Ausgabe zu liefern, wobei der Eingabeteil (28) der Schnittstellenvorrichtung (8) einen Teil der Erfassungskomponente und einen Teil der Anzeigekomponente aufweist, wobei die Anzeigekomponente strukturiert ist, ein gegebenes linguistisches Element anzuzeigen und ein Hervorheben des gegebenen linguistischen Elements in dem Eingabeteil (28) anzuzeigen, wobei die Erfassungskomponente strukturiert ist, in Reaktion auf eine Betätigung des gegebenen linguistischen Elements eine Eingabe an die Prozessorvorrichtung (4) zu liefern.

## Revendications

1. Procédé permettant de réaliser une entrée sur un dispositif électronique portatif (2) comprenant un appareil de traitement (4) et un appareil d'interface (8), l'appareil de traitement (4) comprenant un processeur (12) et une mémoire (16) communiquant de manière électronique entre eux, la mémoire (16) ayant stocké dedans une pluralité d'objets comprenant une pluralité d'objets de langage (18) et une pluralité d'éléments linguistiques, au moins certains parmi les objets de langage (18) comprenant chacun un nombre des éléments linguistiques, et un sous-programme de désambiguïsation (26) pouvant être exécuté sur le processeur (12), l'appareil d'interface (8) ayant une partie d'entrée (28) comprenant une pluralité d'éléments d'entrée (42), où au moins certains des éléments d'entrée (42) ayant chacun une pluralité d'éléments linguistiques (24) qui lui sont attribués, l'appareil d'interface (8) étant structuré pour mettre en évidence un ou plusieurs des éléments linguistiques (24) dans la partie d'entrée (28) en réponse à des signaux provenant de l'appareil de traitement (4), le procédé comprenant le fait :
de détecter une entrée comprenant un nombre d'activations de l'élément d'entrée (42) y compris une activation de l'élément d'entrée actuel ;
d'utiliser le sous-programme de désambiguïsation (26) pour identifier un objet de langage par défaut (18) ayant au moins une partie initiale qui correspond aux éléments linguistiques de l'entrée ;
de mettre en évidence dans la partie d'entrée (28) un élément linguistique actuel (68) qui est compatible avec l'un de la pluralité d'éléments linguistiques (24) attribué à l'élément d'entrée (42) de l'activation de l'élément d'entrée actuel et qui est positionné dans l'objet de langage par défaut (18) à un emplacement qui correspond à l'activation de l'élément d'entrée actuel.

2. Procédé de la revendication 1, comprenant en outre le fait :
d'identifier un élément linguistique prédictif (74) qui est positionné dans l'objet de langage par défaut (18) à un emplacement adjacent et subséquent à l'élément linguistique actuel (68) ; et
de mettre en évidence dans la partie d'entrée (28) l'élément linguistique prédictif (74).

3. Procédé de la revendication 2, comprenant en outre le fait d'identifier comme étant ledit objet de langage par défaut (18) une pluralité d'objets de langage par défaut (18) ayant chacun une partie initiale qui correspond aux éléments linguistiques de l'entrée, d'identifier comme étant ledit élément linguistique prédictif (74) un élément linguistique prédictif (74) pour chacun de la pluralité d'objets de langage par défaut (18), et de mettre en évidence dans la partie d'entrée (28) comme étant l'élément linguistique prédictif (74) une pluralité des éléments linguistiques prédictifs (74).

4. Procédé de la revendication 3, dans lequel au moins certains objets de langage (18) ayant chacun une valeur de fréquence qui lui est associée, et comprenant en outre le fait de faire varier la mise en évidence dans la partie d'entrée (28) de la pluralité d'éléments linguistiques prédictifs (74) selon les valeurs de fréquence de la pluralité d'objets de langage par défaut (18) à partir desquels la pluralité d'éléments linguistiques prédictifs (74) sont obtenus.

5. Procédé de la revendication 1, comprenant en outre, en réponse à chaque activation de l'élément d'entrée de l'entrée, la mise en évidence dans la partie d'entrée (28) d'un élément linguistique attribué à l'élément d'entrée qui est compatible avec un élément linguistique positionné de manière correspondante dans l'objet de langage par défaut (18).

6. Procédé de la revendication 5, comprenant en outre, avec chaque activation de l'élément d'entrée successif de l'entrée, la mise en évidence dans la partie d'entrée (28) d'un élément linguistique qui est attribué à un élément d'entrée de chacun d'un nombre d'activations de l'élément d'entrée immédiatement précédent et qui est compatible avec un élément linguistique positionné de manière correspondante dans l'objet de langage par défaut (18).

7. Procédé de la revendication 6, comprenant en outre le fait d'identifier comme étant ledit objet de langage par défaut (18) un objet de langage différent de celui qui a été identifié comme objet de langage par défaut précédent (18) ayant au moins une partie initiale qui correspondait à une partie de l'entrée précédant l'activation de l'élément d'entrée actuel et, en réponse à l'activation de l'élément d'entrée actuel, de mettre en évidence dans la partie d'entrée (28) un élément linguistique différent d'un élément d'entrée de l'entrée qui a été mis en évidence conformément à l'objet de langage par défaut précédent (18).

8. Procédé de la revendication 6, comprenant en outre le fait d'utiliser une fréquence d'activations d'élément d'entrée de l'entrée pour déterminer la quantité des éléments d'entrée qui précédent l'activation de l'élément d'entrée actuel pour lequel un élément linguistique est mis en évidence, où la quantité augmente à mesure que ladite fréquence diminue.

9. Procédé de la revendication 6, comprenant en outre le fait d'utiliser comme étant ladite mise en évidence une mise en évidence initiale qui change en une mise en évidence par défaut après un intervalle, et d'utiliser une fréquence d'activations d'élément d'entrée de l'entrée pour déterminer une durée de l'intervalle, où la durée augmente à mesure que ladite fréquence diminue.

10. Procédé de la revendication 6, comprenant en outre le fait d'utiliser comme étant ladite mise en évidence d'un élément linguistique d'un élément d'entrée une première mise en évidence et une deuxième mise en évidence, la première mise en évidence variant avec la quantité de fois où l'élément linguistique existe dans la partie initiale de l'objet de langage par défaut (18), la deuxième mise en évidence variant avec le caractère actuel de l'activation de l'élément d'entrée.

11. Procédé de la revendication 6, comprenant en outre le fait de fournir comme étant ladite mise en évidence une mise en évidence séquentielle répétitive de chaque dit élément linguistique qui est attribué à un élément d'entrée de chacun d'un nombre d'activations de l'élément d'entrée immédiatement précédent.

12. Procédé de la revendication 5 dans lequel l'appareil (8) d'interface comprend en outre un champ d'entrée de mot de passe, et comprenant en outre le fait :
de déterminer qu'un foyer de l'appareil de traitement (4) se trouve sur le champ d'entrée de mot de passe ; et
de fournir comme ladite mise en évidence une mise en évidence temporaire dudit élément linguistique attribué à l'élément d'entrée suivi d'une absence de mise en évidence dudit élément linguistique, en réponse à chaque activation de l'élément d'entrée de l'entrée.

13. Procédé de la revendication 5, comprenant en outre le fait de déterminer que la quantité d'activations d'élément d'entrée dans l'entrée et la quantité d'éléments linguistiques dans l'objet de langage par défaut (18) sont égales, et en réponse à cette détermination, de mettre en évidence un élément d'entrée de finalisation.

14. Procédé de la revendication 2, comprenant en outre le fait :
de mettre en évidence dans la partie d'entrée (28) l'élément linguistique actuel (68) avec une première mise en évidence ; et
de mettre en évidence dans la partie d'entrée (28) l'élément linguistique prédictif (74) avec une deuxième mise en évidence différente de la première mise en évidence.

15. Procédé de la revendication 1 dans lequel l'appareil (8) d'interface comprend en outre une partie de sortie, et comprenant en outre le fait :
de détecter une entrée de finalisation ;
de délivrer en sortie au niveau d'un emplacement d'entrée de texte sur la partie de sortie un mot correspondant à l'entrée ; et
de mettre en évidence de manière séquentielle dans la partie d'entrée (28) les éléments linguistiques correspondant au mot.

16. Procédé de la revendication 1, comprenant en outre le fait de déterminer que l'entrée correspond aux deux objets de langage par défaut (18) ayant chacun une quantité d'éléments linguistiques égale à la quantité des activations de l'élément d'entrée dans l'entrée et, de fournir une autre mise en évidence, en réponse à celui-ci.

17. Dispositif électronique portatif (2) comprenant :
un appareil de traitement (4) comprenant un processeur (12) et une mémoire (16) communiquant entre eux de manière électronique, la mémoire (16) ayant stocké dedans un sous-programme de désambiguïsation (26) pouvant être exécuté sur le processeur (12), une pluralité d'objets comprenant une pluralité d'objets de langage (18) et une pluralité d'éléments linguistiques, au moins certains des objets de langage (18) comprenant chacun un nombre des éléments linguistiques ; et
un appareil (8) d'interface ayant une partie d'entrée (28) comprenant une pluralité d'éléments d'entrée (42), où au moins certains des éléments d'entrée (42) ont chacun une pluralité d'éléments linguistiques (24) qui lui sont attribués, l'appareil (8) d'interface étant structuré pour mettre en évidence un ou plusieurs des éléments linguistiques (24) dans la partie d'entrée (28) en réponse à des signaux provenant de l'appareil de traitement (4) ;
la mémoire (16) ayant en outre stocké dedans un nombre de sous-programmes qui, lorsqu'ils sont exécutés sur le processeur (12), amènent le dispositif électronique portatif (2) à exécuter des opérations comprenant le fait :
de détecter une entrée comprenant un nombre d'activations d'élément d'entrée (42) comportant une activation de l'élément d'entrée actuel ;
d'utiliser le sous-programme de désambiguïsation (26) pour identifier un objet de langage par défaut (18) ayant au moins une partie initiale qui correspond aux éléments linguistiques de l'entrée ;
de mettre en évidence dans la partie d'entrée (28) un élément linguistique actuel (68) qui est compatible avec l'un de la pluralité d'éléments linguistiques (24) attribué à l'élément d'entrée (42) de l'activation de l'élément d'entrée actuel et qui est positionné dans l'objet de langage par défaut (18) à un emplacement qui correspond à l'activation de l'élément d'entrée actuel.

18. Dispositif électronique portatif (2) de la revendication 17, dans lequel les opérations comprennent en outre le fait de mettre en évidence dans la partie d'entrée (28) un élément linguistique attribué à l'élément d'entrée qui est compatible avec un élément linguistique positionné de manière correspondante dans l'objet de langage par défaut (18), en réponse à chaque activation de l'élément d'entrée de l'entrée.

19. Dispositif électronique portatif (2) de la revendication 17, dans lequel les opérations comprennent en outre le fait
d'identifier un élément linguistique prédictif (74) qui est positionné dans l'objet de langage par défaut (18) à un emplacement adjacent et ultérieur à l'élément linguistique actuel (68) ; et
de mettre en évidence dans la partie d'entrée (28) l'élément linguistique prédictif (74).

20. Dispositif électronique portatif (2) de la revendication 19, dans lequel les opérations comprennent en outre le fait :
de mettre en évidence dans la partie d'entrée (28) l'élément linguistique actuel (68) avec une première mise en évidence ; et
de mettre en évidence dans la partie d'entrée (28) l'élément linguistique prédictif (74) avec une deuxième mise en évidence différente de la première mise en évidence.

21. Dispositif électronique portatif (2) de la revendication 17 dans lequel les opérations comprennent en outre le fait de déterminer que l'entrée correspond aux deux objets de langage par défaut (18) ayant chacun une quantité d'éléments linguistiques égale à la quantité d'activations de l'élément d'entrée dans l'entrée et, en réponse à cette détermination, de fournir une autre mise en évidence.

22. Dispositif électronique portatif (2) de la revendication 17 dans lequel l'appareil (8) d'interface comprend un écran tactile, l'écran tactile comprenant un composant de détection structuré pour fournir une entrée à l'appareil de traitement (4) en réponse à une activation, l'écran tactile comprenant de manière additionnelle un composant d'affichage structuré pour fournir une sortie visuelle, ladite partie d'entrée (28) de l'appareil d'interface (8) comprenant une partie du composant de détection et une partie du composant d'affichage, le composant d'affichage étant structuré pour afficher un élément linguistique donné et pour afficher une mise en évidence de l'élément linguistique donné dans la partie d'entrée (28), le composant de détection étant structuré pour fournir une entrée à l'appareil de traitement (4) en réponse à une activation de l'élément linguistique donné.
